# EUROPEAN PATENT APPLICATION

(11) **EP 4 524 873 A1**
(43) Date of publication of application: **19.03.2025**
(21) Application number: 23200777.3
(22) Date of filing: 29.09.2023
(51) Int. Cl.: G06T 1/60, G06T 3/40

(54) **DISTORTION CORRECTION BASED ON FIRST COME FIRST SERVE METHOD**

(30) Priority: 12.09.2023 IN 202341061333
(71) Applicant: NXP B.V., 5656 AG Eindhoven (NL)
(72) Inventor: Subramanya Naidu, Sharath, 5656AG Eindhoven (NL); Singh, Chanpreet, 5656AG Eindhoven (NL); Babinec, Tomas, 5656AG Eindhoven (NL); Hassan, Syed Mujtaba, 5656AG Eindhoven (NL); Herrmann, Stephan Matthias, 5656AG Eindhoven (NL)
(74) Representative: Hardingham, Christopher Mark

(57) **Abstract**

There is provided a method and system for distortion correction from a distorted source image to a distortion corrected target image. The method comprises dividing the target image into a plurality of target tiles, each having a position comprising an x coordinate and a y coordinate. The method further comprises dividing the source image into a plurality of source tiles each having a position comprising an x coordinate and a y coordinate. Each source tile corresponds to a target tile according to a first mapping. The source tiles are processed to produce a source tile index until all the source tiles in the source image have been assigned a source tile index value in an ascending order. At least one y coordinate value of a first target tile is higher than a y coordinate value of a second target tile, wherein the first target tile corresponds to a source tile that appears earlier in the ascending order of the source tile index than a corresponding source tile of the second target tile. The method further comprises performing distortion correction of the source image by mapping each source tile to its corresponding target tile, wherein the distortion correction is performed for each tile in turn according to the source tile index.

## Description

### FIELD

The present disclosure relates to a method and system for distortion correction from a distorted source image to a distortion corrected target image. In particular, the present disclosure provides a first come first serve method for processing distorted images.

### BACKGROUND

Geometric distortion can be experienced in optical systems comprising cameras or other image sensors. Lens curvature and magnification properties at different Field-of-View (FOV) points can lead to straight lines being represented as curved lines. Object shapes can also change substantially as they move from one position on the sensor to another. While for many applications this may not pose a significant problem, it can be an issue for computer vision as the same object looks different depending on which area of the camera sensor it gets projected to.

When the geometric distortion exceeds an acceptable value (which can depend on the FOV that the camera has) the introduced distortion gets digitally corrected by a remapping process often implemented in a dedicated semiconductor intellectual property block (IP block) on a System-on-Chip (SoC).

In existing systems, the correction is done as a backwards mapping by looking for each pixel of the corrected image (e.g. a target pixel) in the distorted image. Interpolation to the surrounding source pixels can be used to determine the correction. This is a very inefficient approach that requires reading each source pixel many times from the external memory, such as a Double Data Rate (DDR), which artificially extends the required bandwidth required to perform the image processing.

Another approach is to read the image lines straight from a camera, such as a Mobile Industry Processor Interface - Camera Serial Interface (MIPI-CSI) or image signal processor (ISP) directly into the local system memory (SRAM) or local buffer of the dedicated IP block for processing. However, this can also be demanding on SRAM size.

Another way to process the image is by dividing the output image into fixed size tiles and then fetching only relevant part of the input image required from external memory to internal memory for correction instead of the complete image. This also requires external memory bandwidth which increases the system cost.

The present disclosure provides a method to reduce the size of the internal memory required to provide distortion correction to an image.

### SUMMARY

According to a first aspect, there is provided a method for distortion correction from a distorted source image to a distortion corrected target image. The method comprises dividing the target image into a plurality of target tiles, each target tile having a target tile position comprising an x coordinate of the target tile and a y coordinate of the target tile within the target image. The method further comprises dividing the source image into a plurality of source tiles, each source tile having a source tile position comprising an x coordinate of the source tile and a y coordinate of the source tile within the source image. Each source tile corresponds to a target tile according to a first mapping based on the positions of the tiles. The source tiles are processed to produce a source tile index by: (i) selecting a first source tile of the plurality of source tiles that has a lowest y coordinate value and assigning a first source tile index value to the selected source tile in the source tile index; (ii) selecting a next source tile of the remaining plurality of source tiles that has a next lowest y coordinate value and assigning an incremental source tile index value to that next selected source tile in the source tile index; and (iii) repeating step (ii) until all the source tiles in the source image have been assigned a source tile index value in an ascending order. At least one y coordinate value of a first target tile is higher than a y coordinate value of a second target tile, wherein the first target tile corresponds to a source tile that appears earlier in the ascending order of the source tile index than a corresponding source tile of the second target tile. The method further comprises performing distortion correction of the source image by mapping each source tile to its corresponding target tile, wherein the distortion correction is performed for each tile in turn according to the source tile index. The target image is the distortion corrected target image and the source image is the distorted source image.

The source tile index may also be called a sorted source tile index, or a sorted tile index. The sorting of the source tiles into a source tile index is performed based on an availability of information during processing, for example of data lines as they become available from the camera or other image signal.

The combined processes of mapping the source tiles to corresponding target tiles and processing the source tiles according to a source tile index allows for distortion correction to be enabled on a first come first serve basis during runtime. Distortion correction is performed by tile remapping from a source tile to a corresponding target tile based on first come first serve basis.

In some embodiments, if two source tiles have a same y coordinate value in step (ii), the method may further comprise: selecting a first source tile of the two source tiles that has a lowest x coordinate value and assigning an incremental source tile index value to that first selected source tile in the source tile index: and assigning a next incremental source tile index value to the second source tile in the source tile index.

Source tiles with lower x coordinate values will be available for processing earlier than those with higher x values, so they are assigned a lower index value than source tiles with higher x coordinate values.

In some embodiments, the method may further comprise determining a target tile look up table (LUT) based on the first mapping from a source tile to a respective target tile; wherein the LUT indicates source tile coordinate position information for each source tile; and wherein the LUT is re-ordered based on the sorted tile index. The LUT co-ordinates may be relative to a source tile.

Optionally, the source tile index and the LUT are determined prior to a runtime and stored in an external memory. The source tile index (e.g. the sorted source tile index) and the LUT may be recalled from the external memory during the runtime.

In some embodiments, each target tile has a target tile size comprising a width of the target tile and a height of the target tile; and wherein each source tile has a source tile size comprising a width of the source tile and a height of the source tile. The width and height of the tiles can be measured in numbers of pixels in the x and y directions respectively.

In some embodiments, the plurality of target tiles may each have a uniform size. The plurality of source tiles may vary in size based on an amount of a distortion of each source tile. Source tiles at the centre of the source image may be larger than source tiles at the edges of the source image.

In some embodiments, a source tile is larger than a respective target tile that the source tile maps to.

In some embodiments, the source image comprises a plurality of pixel rows extending a full width of the source image. During a runtime, a memory stores (e.g. buffers) data corresponding to a subset of the pixel rows for performing the distortion correction to, wherein the subset of pixel rows comprises one or more source tiles. In some examples, the source tiles may have consecutive source tile index values, whilst in other examples the source tiles may have non-consecutive source tile index values. Optionally, the memory that stored the data corresponding to a subset of pixel rows is a circular buffer.

In some embodiments, source tile processing for distortion correction can be triggered as soon as a predetermined number of pixel rows are filled in the memory (e.g. buffer). This means that it is not required that the whole buffer is filled for the tile distortion correction processing to start.

In some embodiments, the method may further comprise determining a minimum memory size of the memory for storing the subset of pixel rows for processing comprising: determining a tallest source tile based on the height information of the plurality of source tiles; and calculating a minimum memory size by multiplying the height of the tallest source tile by a memory required to store one pixel row.

In some embodiments, the method may further comprise multiplying the result of the calculation by an additional factor greater than 1. This allows the memory to be able to optimally fit more tiles into the memory for processing.

In some embodiments, the width of the target tiles is selected based on a DRAM burst length.

In some embodiments, each source tile is associated with a corresponding destination address.

In some embodiments, the source image is received from an image sensor or image signalling processor with a lens having a known distortion. The image sensor may be a camera, for example. A source image with the known distortion could be received from the external memory.

The method may further comprise removing redundant data relating to the source image that is not part of any source tile. A total area covered by the plurality of source tile images is less than the area of the source image.

According to a second aspect, there is provided a system comprising: a lens and an image sensor (or an image signal processor) for acquiring a source image; a memory for storing at least part of the source image and a target image; and a processor configured to carry out the method according to the first aspect.

According to a third aspect, there is provided an automobile comprising a system according to the second aspect.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
Figure 1A illustrates a representation of a corrected image;
Figure 1B illustrates a representation of a distorted image;
Figure 2 illustrates a flow diagram of a method for distortion correction according to an embodiment of the disclosure;
Figure 3 illustrates a target image arranged into a plurality of tiles according to an embodiment of the disclosure;
Figures 4 illustrates a source image arranged into a plurality of source tiles according to an embodiment of the disclosure;
Figures 5A to 5C illustrate a sequence of how source tiles are processed in a source image according to an embodiment of the disclosure;
Figure 6 illustrates a schematic diagram of a system used for distortion correction according to an embodiment of the disclosure;
Figure 7 illustrates a schematic diagram of an alternative system to that of Figure 6.

### DETAILED DESCRIPTION

The following detailed description is merely illustrative in nature and is not intended to limit the embodiments of the subject matter or the application and uses of such embodiments. As used herein, the word "example" means "serving as an example, instance, or illustration." Any implementation described herein as an example is not necessarily to be construed as preferred or advantageous over other implementations.

There is described herein a method for distortion correction of an image according to a first come first served basis during runtime which advantageously reduces local memory size requirements and provides improved latency and increased image processing speed. The method is enabled by a unique mapping that allows data to be processed as soon as it becomes available. Using the unique mapping and the first come first serve method improves the overall efficiency of processing distortion correction for an image and advantageously reduces local memory requirements and improves latency.

Instead of waiting for memory to fill up with data such that image processing of the source image is performed from top to bottom and from left to right, the present disclosure utilises knowledge of the distortion to trigger data for processing as it becomes available. In one example using a rolling shutter camera, which captures images by exposing each row of pixels sequentially, local memory is filled line by line with camera data. Using the method provided by the present disclosure can reduce the local memory storage requirements by performing distortion correction to the data as is become available.

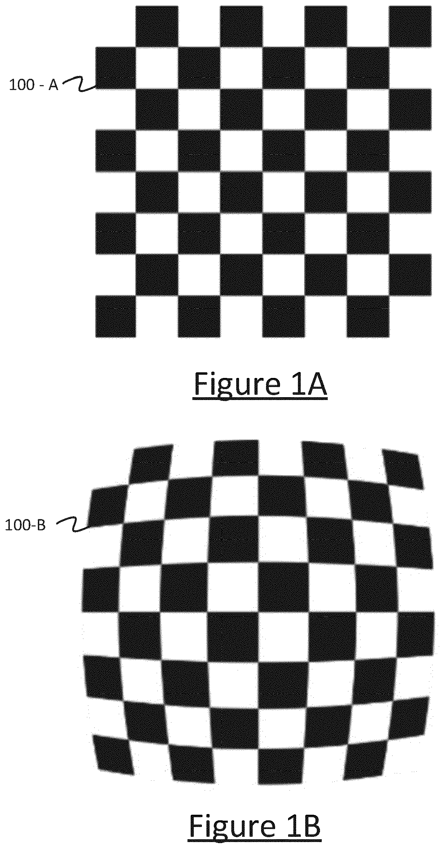

Figure 1A illustrates a representation of an undistorted image, e.g. a target image or a distortion corrected target image, comprising a grid. As illustrated, the grid in the undistorted image has straight lines.

Figure 1B illustrates a representation of a distorted image, e.g. a source image, comprising the same grid as the undistorted grid of Figure 1A, where a distortion has taken place due to an optical system comprising a camera whereby lens curvature and magnification properties at different Field-of-View points has caused the originally straight lines to be curved.

The present disclosure provides a method for correcting a distorted image such at that of Figure 1B back to an undistorted image as illustrated in Figure 1A. Throughout the below description, a "source image" refers to a distorted image and a "target image" refers to a corrected image which is a representation of the undistorted image.

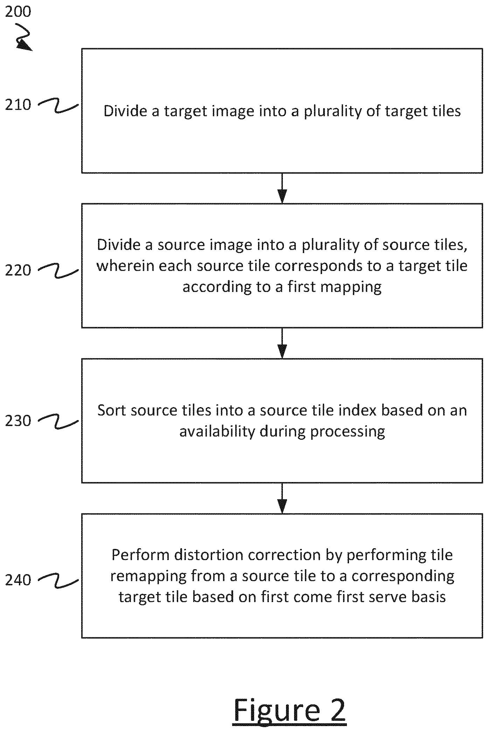

Figure 2 illustrates a flow diagram of a method 200 for distortion correction from a distorted source image to a distortion corrected target image according to an embodiment of the disclosure.

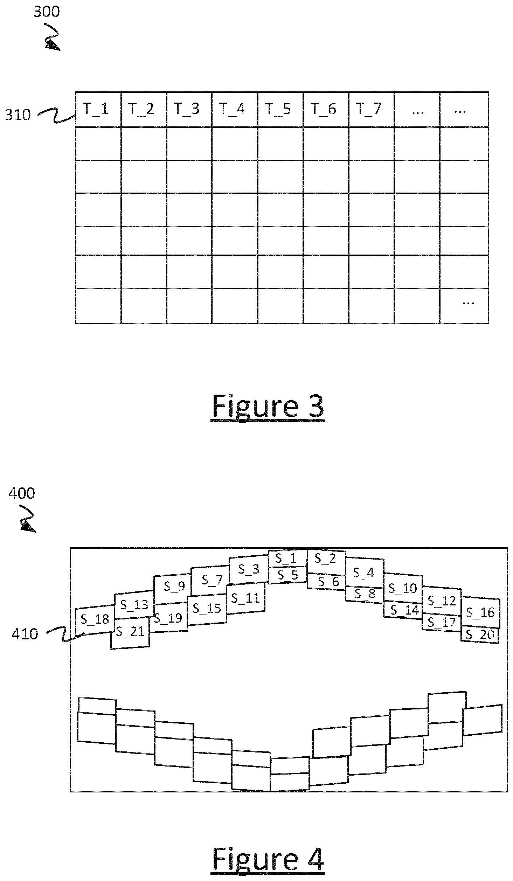

According to a first step 210, a target image is divided into a plurality of target tiles. The target image is a distortion corrected version of the image. Each target tile comprises information relating to a target tile position within the target image. Figure 3 illustrates a target image 300 arranged into a plurality of target tiles 310 according to the first step 210 of the method.

In some examples, a target image is divided into series of regular tile sizes of 32 x 8 pixels or 64 x 8 pixels. Different target image sizes and target tile sizes can also be implemented. Target tile size remains uniform across the target tile image 300.

As illustrated in Figure 3, target tiles 310 are assigned an identifier, such as T_1, T_2, T_3, etc. Target tiles 310 cover an area defined by: an x coordinate based on a location of the target tile 310 in relation to the target image 300; a y coordinate also based on a location of the target tile 310 in relation to the target image 300; a specified width (e.g. 32 pixels); and a specified height (e.g. 8 pixels). A target tile 310 defines an area according to (x, y, x + width, y + height).

In some embodiments, the width of a target tile 310 is selected based on a Dynamic Random Access memory (DRAM) burst length. In DRAM, a burst refers to the number of data transfers that occur in a single read or write operation. The burst length specifies the number of data transfers that will occur in a single operation. For example, the burst length of DDR can be 4 or 8. Each burst transmits 64 bits of data, or 8 bytes. So, an 8-beat burst in DDR would mean that 8 pieces of data are transferred in a single operation. According to a second step 220, a source image is divided into a plurality of source tiles, wherein each source tile corresponds to a target tile according to a first mapping. The first mapping determines how, for each target tile of the target image, a corresponding source tile is found in the source image. The first mapping describes how the data from the source image is taken from the source image and where it maps to in the target image. Each source tile comprises information relating to a source tile position within the source image. Figure 4 illustrates a source image 400 arranged into a plurality of source tiles 410 according to the second step 220 of the method. Figure 4 illustrates a subsection the source tiles 410 for illustrative purposes only, it will be appreciated that the source tiles 410 in practice extend across the centre of the image as well.

As illustrated in Figure 4, source tiles 410 are assigned an identifier, such as S_1, S_2, S_3, etc. Source tiles 410 cover an area defined by: an x coordinate based on a location of the source tile 410 in relation to the source image 400; ay coordinate also based on a location of the source tile 410 in relation to the source image 400; a specified width; and a specified height. A source tile 410 defines an area according to (x, y, x + width, y + height). Information or data concerning areas of pixels that do not form part of a source tile 410 after identifying the source tiles can be deleted or otherwise disposed of because it will not be used in creating the target image 300.

In some embodiments, the source tiles 410 each have a different size. Larger source tiles sizes are found at the centre of the image, which experience less overall distortion. Source tiles 410 along the edges and in corners of the source image 400 are smaller than those at the centre and experience more distortion.

In some embodiments, source tiles 410 of Figure 4 are larger than target tiles 310 of Figure 3.

Each source tile 410 corresponds to a target tile 310 according to a mapping. In some embodiments, one source tile 410 maps to one target tile 310. In other embodiments this can vary.

**Table 1 indicates an example of source tile to target tile mapping for an initial eleven target tiles along a top row of a target image for a 4 MP 140° field of view image with a target tiles size of 32 x 16 pixels.**

| **Source Tile** | | | | **Target Tile** | | | | |
|---|---|---|---|---|---|---|---|---|
| **X** | **Y** | **Width** | **Height** | | **X** | **Y** | **Width** | **Height** |
| 461 | 237 | 14 | 17 | **T_1** | 0 | 0 | 32 | 16 |
| 470 | 229 | 15 | 17 | **T_2** | 32 | 0 | 32 | 16 |
| 481 | 222 | 15 | 17 | **T_3** | 64 | 0 | 32 | 16 |
| 492 | 215 | 17 | 17 | **T_4** | 96 | 0 | 32 | 16 |
| 504 | 208 | 17 | 17 | **T_5** | 128 | 0 | 32 | 16 |
| 517 | 202 | 18 | 16 | **T_6** | 160 | 0 | 32 | 16 |
| 531 | 195 | 18 | 17 | **T_7** | 192 | 0 | 32 | 16 |
| 546 | 189 | 18 | 16 | **T_8** | 224 | 0 | 32 | 16 |
| 561 | 182 | 19 | 17 | **T_9** | 256 | 0 | 32 | 16 |
| 576 | 176 | 20 | 16 | **T_10** | 288 | 0 | 32 | 16 |
| 592 | 169 | 20 | 17 | **T_11** | 320 | 0 | 32 | 16 |

Table 1 shows an example of the mapping of a plurality of source tiles 410 to a plurality of target tiles 310, wherein the target tiles 310 are aligned along a top row across the target image 300 as illustrated in Figure 3. As illustrated, the target tiles 310 each have uniform size, whilst the source tiles 410 each vary in size.

According to step 230 of Figure 2, the source tiles are sorted into a source tile index. The source tile index is determined based on an availability of image lines from a camera or other image sensor/image signal processor.

**Table 2 shows an equivalent table to that of Table 1 after the source tiles have been processed and sorted into a Source Tile Index for a 4 MP 140° field of view image with a target tiles size of 32 x 16 pixels.**

| **Source Tile** | | | | **Target Tile** | | | |
|---|---|---|---|---|---|---|---|
| **X** | **Y** | **Width** | **Height** | **X** | **Y** | **Width** | **Height** |
| 1397 | 23 | 31 | 12 | 1376 | 0 | 32 | 16 |
| 1428 | 23 | 30 | 12 | 1408 | 0 | 32 | 16 |
| 1337 | 24 | 31 | 12 | 1312 | 0 | 32 | 16 |
| 1367 | 24 | 31 | 11 | 1344 | 0 | 32 | 16 |
| 1458 | 24 | 31 | 11 | 1440 | 0 | 32 | 16 |
| 1488 | 24 | 31 | 12 | 1472 | 0 | 32 | 16 |
| 1307 | 25 | 30 | 13 | 1280 | 0 | 32 | 16 |
| 1519 | 25 | 30 | 12 | 1504 | 0 | 32 | 16 |
| 1549 | 26 | 30 | 12 | 1536 | 0 | 32 | 16 |
| 1277 | 27 | 30 | 13 | 1248 | 0 | 32 | 16 |
| 1579 | 28 | 30 | 12 | 1568 | 0 | 32 | 16 |

Table 2 shows an extract of a few sample tiles after the tiles have been sorted into a source tile index. This can be performed offline, prior to a generation of a source image from a camera or other image processing device. Sorting the source tiles 410 into a sorted tile index comprises: (i) selecting a first source tile of the plurality of source tiles that has a lowest y coordinate value and assigning a first source tile index value (e.g. S_1) to the selected source tile in the source tile index; (ii) selecting a next source tile of the remaining plurality of source tiles that has a next lowest y coordinate value and assigning an incremental source tile index value (e.g. S_2) to that next selected source tile in the source tile index; and (iii) repeating step (ii) until all the source tiles in the source image have been assigned a source tile index value in an ascending order (e.g. S_1, S_2, S_3, S_4, ...) until all the source tiles have been sorted. Once sorted, at least one y coordinate value of a first target tile is higher than a y coordinate value of a second target tile, wherein the first target tile corresponds to a source tile that appears earlier in the ascending order of the source tile index than a corresponding source tile of the second target tile. This means that the order of the source tiles does not correlate to a simple left-to-right, top-to-bottom order, and is instead based on an order defined by a position and a height of the source tile 410 relative to the other source tiles. When the tiles are sorted, a target tile in the middle of the image may be selected and corrected first before an edge tile of a target tile in the same row based on an availability of the complete source tile as the source image is captured. Similarly, a tile at the right-hand edge of the source image may be processed before a central tile, or a left-hand tile, if the data is available there first. Accordingly, selection of the tiles for processing is not performed in a raster-like fashion.

After sorting the source tiles into the source tile index, the ascending order ensures that a first source tile 410 in the source tile index, for example tile S_1 illustrated in Figure 4, is the source tile which has the lowest y coordinate of all the source tiles 410 of the source image 400. In one example, the source tiles are sorted based on a final line of the source tile, defined by y + height of the source tiles.

The order of the source tiles 410 in the source tile index according to an ascending order defines an order of availability of each of the source tiles 410 during a runtime. Data is buffered from the top left-hand corner of the source image 400 to the bottom right-hand corner of the source image 400. All the data for the first source tile, S_1, will be available before any of the other source tiles. Similarly, data for source tile S_2 will be available next, after S_1. Data for source tile S_3 will be available after S_2, and so on until all the data is available. Due to the distortion caused by the lens which takes the source image 400, the first source tile that becomes available is not the topmost left-hand corner source tile or the tile that maps to the topmost left-hand corner of the target image 300. Instead, the source tile that appears first in the source tile index (S_1) is in the top-centre of the source image 400.

If two source tiles have the same last line (e.g. a same y + height value), then they will be sorted based on an x-coordinate value of the source tile 410. The above-described method for sorting the source tiles 410 in the source tile index comprises selecting a first source tile of the two source tiles that has a lowest x coordinate value and assigning an incremental source tile index value to that first selected source tile in the source tile index, and assigning a next incremental source tile index value to the second source tile in the source tile index. If there are more than two tiles with the same last line value, they will all be ordered based on their x-coordinate.

After the sorting, it can be determined how each source tile 410 will be remapped to each target tile 310. For example, as illustrated in Figures 3 and 4, the first source tile S_1 tile could be remapped to a fifth target tile T_5. T_5 tile region information needs to be known in terms of x, y, width and height. Table 1 shows the source and target regions of first few tiles in terms of x, y, width and height for a 4 MP 140° FOV image before sorting when using a target tile region of 32 x 16. Table 2 shows the co-ordinates of a few tiles in terms of x, y, width, height after sorting.

Sorting using this method, source tiles 410 are indexed based on their availability in a line-by-line fashion. The sorted indexes are used for distortion correction of the source tiles 410 on a first come first serve basis during processing, i.e. during a runtime. Data relating to the source image received from an image sensor or image processing signal is collected in a raster fashion.

It can be observed from Table 1 that the source tile y-coordinates start at line 237. After sorting, as illustrated in Table 2, it can be seen that the source tile y-coordinates start at line 23. The number of lines required to be buffered to start processing the source tile which has a y-coordinate of 23 is 23 lines, compared to the 237 lines required to be able to process the first source tile of Table 1. The number of lines that need to be buffered to be able to start processing the source tiles for distortion correction is reduced when using the presently described method compared to a prior art approach, which would wait for 237 lines to be able to start processing the first tile. Accordingly, local memory usage is reduced and latency is improved.

Tables 1 and 2 can be precomputed for lenses with known distortion and stored in an external memory (e.g. a DDR) and read by Hardware IP during runtime processing.

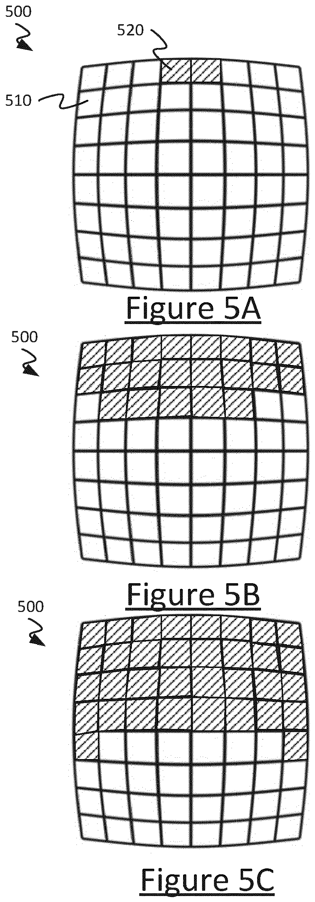

Figures 5A to 5C illustrate a sequence of how the source tiles are processed in a source image 500. Unprocessed tiles 510 and processed tiles 520 are shown. Using the first come first serve method of the present disclosure, source tiles are processed in a non-linear manner, despite pixel data being buffered in a linear manner (e.g. by a raster scan). Figure 5A illustrates that the first few tiles that will be buffered for distortion correction are In the top centre of the source image 500. Figure 5B illustrates the processed tiles 520 "ballooning out" from the top-centre of the source image 500. Figure 5C illustrates that after the mid-way point of the image that the processed tiles 520 happen from the edges in towards the middle of the source image 500 due to the ascending order of the sorted source tiles in the source tile index. Target tiles at a left-hand edge are be processed before right-hand edge tiles having a same y-coordinate value as they have a lower x-coordinate and will be made available in the local memory before those on a right-hand edge.

For each target tile 310, information about how the pixels inside each target tile 310 are remapped from a corresponding source tile 410 is required. For each of the target tiles 310, it is assigned a corresponding look-up-table (LUT) which contains the mapping from source tile 410 to its corresponding target tile 310. This LUT contains an index which is relative with a source tile 410. This is illustrated in Tables 3 and 4 below.

**Table 3 shows an example of a section of a target tile look-up-table (LUT) wherein each entry indicates a pixel location (x, y) to retrieve information from a corresponding source tile to.**

| Target Tile Look Up Table | | | |
|---|---|---|---|
| 3,0 | 4,0 | 5,0 | 6,0 |
| 2,1 | 3,1 | 4,1 | 5,1 |
| 2,2 | 3,2 | 4,2 | 5,2 |
| 1,3 | 2,3 | 3,3 | 4,3 |
| 1,4 | 2,4 | 3,4 | 4,4 |
| 0,5 | 1,5 | 2,5 | 3,5 |
| 0,6 | 1,6 | 2,6 | 3,6 |
| 0,7 | 1,7 | 2,7 | 3,7 |

**Table 4 shows an example of a section of a source tile and the respective coordinates (x, y) of each pixel within the tile. Mapping of the pixels to the LUT illustrated in Table 3 is shown using bold.**

| **Source Tile** | | | | | | | |
|---|---|---|---|---|---|---|---|
| 0,0 | 1,0 | 2,0 | **3,0** | **4,0** | **5,0** | **6,0** | 7,0 |
| 0,1 | 1,1 | **2,1** | **3,1** | **4,1** | **5,1** | 6,1 | 7,1 |
| 0,2 | 1,2 | **2,2** | **3,2** | **4,2** | **5,2** | 6,2 | 7,2 |
| 0,3 | **1,3** | **2,3** | **3,3** | **4,3** | 5,3 | 6,3 | 7,3 |
| 0,4 | **1,4** | **2,4** | **3,4** | **4,4** | 5,4 | 6,4 | 7,4 |
| **0,5** | **1,5** | **2,5** | **3,5** | 4,5 | 5,5 | 6,5 | 7,5 |
| **0,6** | **1,6** | **2,6** | **3,6** | 4,6 | 5,6 | 6,6 | 7,6 |
| **0,7** | **1,7** | **2,7** | **3,7** | 4,7 | 5,7 | 6,7 | 7,7 |
| 0,8 | 1,8 | 2,8 | 3,8 | 4,8 | 5,8 | 6,8 | 7,8 |

Table 4 illustrates a source tile 410 having coordinates (x, y) within said source tile 410. In one example, the source tile is the S_1 source tile illustrated in Figure 3, having a Source Tile index of (X, Y, Width, Height = 461, 237, 14, 17). The LUT of Table 3 can be based on this source tile index. The target tile LUT of Table 3 shows remapping information of each pixel in the corresponding source tile of Table 4. In this example, Pixel (0,0) of Target Tile LUT contains (3,0) which means that target tile pixel (0,0) will be fetched from Pixel (3,0) of the source tile of Table 4. This translates to an absolute address of (461 + 3), (237,0). This mapping is known for each source tile 410 in the target tile LUT. Put simply, the look-up-table indicates which pixels of the source tile are the required pixels for the corresponding target tile.

According to the final step 240 of Figure 2, distortion correction is performed based on a first come first serve basis.

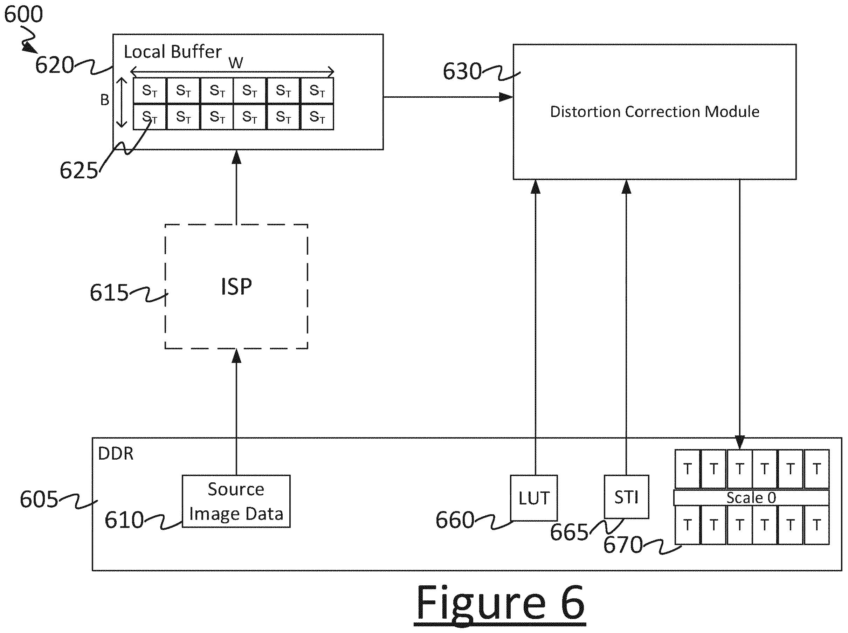

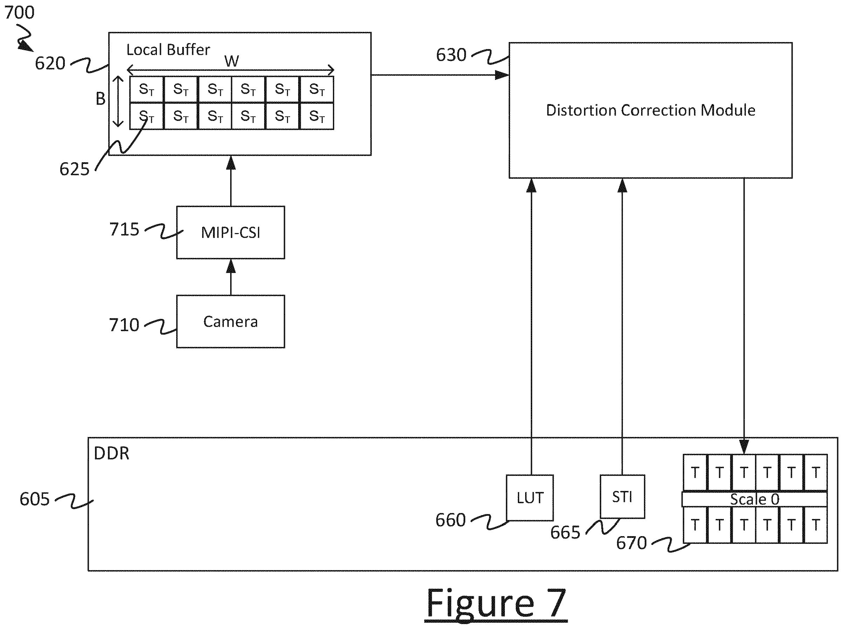

Figure 6 illustrates a schematic diagram of a system 600 used for distortion correction according to an embodiment of the disclosure and designed to perform distortion correction on a first come first serve basis. Figure 7 illustrates a schematic diagram of an alternative system 700 to that of Figure 6.

The system 600 comprises a DDR 605 comprising a source image data module 610 , a look up table LUT 660, a source tile index 665, and a target image 670 which is a distortion corrected image. The system 600 also comprises an image signal processor (ISP) 615, a local buffer 620 comprising source tiles 625, and a distortion correction module 630.

Dataflow of the system 600 is illustrated in Figure 6. Data is collected at the source image data module 610. In one example, data from the image sensor can be received at the module 610 at low and high exposures which can then be merged in High Dynamic Range (HDR) inside the ISP 615. Output of ISP 615 will be RGB data (e.g. colour data). Image data, for example from an output of ISP 615is stored as image lines into a local buffer 620.

In an alternative arrangement, the source image data 610 may come from an external memory (e.g. the DDR 605) and be read directly to the local buffer 620 without ISP 615 in between. In the case of smart cameras, ISP is done inside the camera and distorted image is read from the external memory. In this case, there may be only one exposure.

In an alternative arrangement illustrated in Figure 7, the source image data may come from a camera 710, which for example may be connected via a camera serial interface 715, such as a MIPI-CSI-2 Port, which is connected to the local buffer 620. Image lines from the camera are stored in the local memory.

In some examples, the local buffer 620 is a circular buffer which is a data structure that uses a single, fixed-size buffer as if it were connected end-to-end. This structure lends itself easily to buffering data streams, such as for use in the present disclosure. Line width (W) and minimum lines buffered (B) determine the minimum size of the local buffer 620 during runtime. The local buffer 620 stores a plurality of source tile S_{T} information.

The distortion correction module 630 reads source tiles S_{T} for remapping and distortion correction. The LUT 660 and the source tile index 665 are also read into the distortion correction module 630 for performing distortion correction to in a first come first serve method as described above. The distortion correction module 630 reads the source tiles into the internal search RAM for remapping.

In one example, the distortion correction module may comprise a series of processing modules. The distortion correction module 630 reads source tiles for remapping from the local buffer 620 (e.g. a circular buffer) to an internal memory of the distortion correction module 630. Information retrieved from a source tile index 665 determines which source tile is to be read from the local buffer 620 to the internal memory and the target image 670. A source tile in the internal memory may in some examples be converted to planar formats, for example if the input is in a YUV420 semiplanar format. Input format converter can up sample YUV420 formats to YUV444 planar formats after input format conversion. Based on information received from the LUT 660 and the source tile index 665, a source tile is remapped and the output is stored in an output RAM of the distortion correction module 630. A tile scaler module within the distortion correction module 630 reads the distortion corrected tile from the output RAM and performs a downscaling of the tile (e.g. by 50%). For example, if the output RAM has tile size of 32 x 16 pixels, the tile scaler does a downscaling to 16 x 8 pixel tile. Once scaling is done, the output is stored in a scaler memory. An output format converter converts planar formats to other formats such as RGB Interleaved or YUV interleaved or YUV420 semiplanar formats, as required. The converted tile is then written out to the target image 670 at the DDR 605 via an Advanced extensible Interface (AXI).

During runtime, the system 600 performs distortion correction. To determine a minimum size of the local buffer 620, a calculation can be performed. Firstly, a tallest source tile 410 of the plurality of source tiles is determined. Usually, biggest (e.g. tallest) source tile is at the centre of the source image 400. For example, the tallest source tile, for a target tile size of 32 x 16 pixels, is 36 x 20pixels (for a source image having 4MP and 140° FOV) and its location is at (1284, 533) in the source image 400. This can be described as a "worst case" source tile because it requires the most amount of memory to process distortion correction of. Based on this "worst case" source tile, a size of the line buffers of the local buffer 620 can be decided. In some examples, this line buffer size can be fixed in the external memory and recalled. A checking function can verify if the "worst case" tile fits inside the allocated buffer size. Note that for different size tiles and different distortions and FOV, etc., the minimum memory size will vary.

Based on the tallest source tile data, the source image 400 is divided into several row segments comprising a plurality of pixel rows. A row segment can be defined by the number of pixels across the full width of the source image x the number of pixel rows in height (e.g. height of the tallest tile). For the example described above, for a 32 x 16 pixel target tile 310 having a tallest source tile 410 with a height of 20 pixels, each row segment may have a size (e.g. height) of 20 lines. In some examples, the row segments may be larger than the height of the tallest tile to be able to optimally fit most of the source tiles into a row segment. The above-mentioned example could have a row segment having a height of 20 lines ± σ, where σ may be a percentage of the height, a fixed number, etc. For a circular buffer, eight lines can be held at once, so it may be beneficial for σ to equal eight in this particular example. The row segment calculation defines the minimum size of SRAM (e.g. size of the local buffer 620) allocated to process the whole image. In one example using a circular buffer, for a 2880 x 1600 pixel image, each row segment could be 2880 x 28 lines, where 28 = 20+ 8.

Each source tile is associated with a corresponding destination address. This address will have information where the corrected tile will be stored in the memory (e.g. at the DDR 605).

Steps 210 to 230 of the method illustrated in Figure 2 can be performed as offline processing steps, for example that can be calculated prior to runtime. Offline processing steps determine which source tiles belongs to which row segment for a known lens distortion, ready for processing of distortion correction to take place. Offline processing steps also include determining the source tile index 665 and the LUT 660.

During a runtime, a maximum number of lines (e.g. defined by the row segments) that needs to be buffered at the local buffer 620 can be based on the offline calculations. The sorted source tile index 665 can be used to trigger tiles for distortion correction based on a first come first serve basis. From the sorted list, hardware IP waits until the required number lines of first source tile are available in the local buffer 620, after which the hardware IP can be triggered for correction of a first source tile. As soon as the required number of lines for the second source tile to be distortion corrected are available in the local buffer 620, the second source tile will be processed. For example, as shown in Figure 4, source tiles S_1, S_2, S_3, S_4, S_5 will be processed one after another. The Sorted Source Tile Index 665 can either be stored inside the Hardware IP or read from external memory (DRAM). The LUT contains the information of Target Tile regions for each source tile regions as explained above in relation to Tables 3 and 4.

Using the above-described method for processing a distorted source image, where the tiles are processed as soon as they become available, the amount of memory required is reduced from 2.45 Mbytes to 287 Kbytes, based on calculations of waiting for all the data to be available for the first target tile 310 in a top right hand corner of the target image 300, such as target tile T_1 of Figure 3, vs the present disclosure.

The present disclosure is suited for all camera-based products that benefit from distortion correction. In particular, the method described above may be used in automobiles in systems such as camera-based Driver Cabin monitoring, Rear View Camera system, Passenger monitoring and Advanced Driver Assistance Systems. Use cases include: in front camera systems, surround view systems, rear-view camera systems, driver monitoring camera systems, etc. Of course, the method can also be applied to other applications.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for distortion correction from a distorted source image to a distortion corrected target image, the method comprising:
dividing the target image into a plurality of target tiles, each target tile having a target tile position comprising an x coordinate of the target tile and a y coordinate of the target tile within the target image;
dividing the source image into a plurality of source tiles, each source tile having a source tile position comprising an x coordinate of the source tile and a y coordinate of the source tile within the source image,
wherein each source tile corresponds to a target tile according to a first mapping based on the positions of the tiles;
processing the source tiles to produce a source tile index by:
(i) selecting a first source tile of the plurality of source tiles that has a lowest y coordinate value and assigning a first source tile index value to the selected source tile in the source tile index;
(ii) selecting a next source tile of the remaining plurality of source tiles that has a next lowest y coordinate value and assigning an incremental source tile index value to that next selected source tile in the source tile index; and
(iii) repeating step (ii) until all the source tiles in the source image have been assigned a source tile index value in an ascending order;
wherein at least one y coordinate value of a first target tile is higher than a y coordinate value of a second target tile, wherein the first target tile corresponds to a source tile that appears earlier in the ascending order of the source tile index than a corresponding source tile of the second target tile; and
performing distortion correction of the source image by mapping each source tile to its corresponding target tile, wherein the distortion correction is performed for each tile in turn according to the source tile index.

2. The method of claim 1, wherein if two source tiles have a same y coordinate value in step (ii), the method further comprises:
selecting a first source tile of the two source tiles that has a lowest x coordinate value and assigning an incremental source tile index value to that first selected source tile in the source tile index: and
assigning a next incremental source tile index value to the second source tile in the source tile index.

3. The method of claim 1 or claim 2, further comprising determining a target tile look up table (LUT) based on the first mapping from a source tile to a respective target tile;
wherein the LUT indicates source tile coordinate position information for each source tile; and
wherein the LUT is re-ordered based on the sorted tile index.

4. The method of claim 3, wherein the source tile index and the LUT are determined prior to a runtime and stored in an external memory; and
wherein the source tile index and the LUT are recalled from the external memory during the runtime.

5. The method of any preceding claim, wherein each target tile has a target tile size comprising a width of the target tile and a height of the target tile; and
wherein each source tile has a source tile size comprising a width of the source tile and a height of the source tile.

6. The method of claim 5, wherein the plurality of target tiles each have a uniform size; and
the plurality of source tiles vary in size based on an amount of a distortion of each source tile.

7. The method of claim 6, wherein a source tile is larger than a respective target tile that the source tile maps to.

8. The method of claim 6 or claim 7, wherein the source image comprises a plurality of pixel rows extending a full width of the source image; and
during a runtime, a memory stores data corresponding to a subset of the pixel rows for performing the distortion correction to, wherein the subset of pixel rows comprises one or more source tiles.

9. The method of claim 8, further comprising determining a minimum memory size of the memory for storing the subset of pixel rows for processing comprising:
determining a tallest source tile based on the height information of the plurality of source tiles; and
calculating a minimum memory size by multiplying the height of the tallest source tile by a memory required to store one pixel row.

10. The method of claim 9, further comprising multiplying the result of the calculation by an additional factor greater than 1.

11. The method of any of claims 5 to 10, wherein the width of the target tiles is selected based on a DRAM burst length.

12. The method of any preceding claim, wherein the source image is received from an image sensor or an image signalling processor with a lens having a known distortion.

13. The method of any preceding claim, further comprising deleting data relating to the source image that is not part of any source tile.

14. A system comprising:
a lens and an image sensor for acquiring a source image;
a memory for storing at least part of the source image and a target image; and
a processor configured to carry out the method according to any of claims 1 to 13.

15. An automobile comprising a system according to claim 14.

## Amended claims

### Amended claims in accordance with Rule 137(2) EPC.

1. A method for distortion correction from a distorted source image to a distortion corrected target image, the method comprising:
Dividing (210) the target image into a plurality of target tiles, each target tile having a target tile position comprising an x coordinate of the target tile and a y coordinate of the target tile within the target image;
Dividing (220) the source image into a plurality of source tiles, each source tile having a source tile position comprising an x coordinate of the source tile and a y coordinate of the source tile within the source image,
wherein each source tile corresponds to a target tile according to a first mapping based on the positions of the tiles;
processing (230) the source tiles to produce a source tile index by:
(i) selecting a first source tile of the plurality of source tiles that has a lowest y coordinate value and assigning a first source tile index value to the selected source tile in the source tile index;
(ii) selecting a next source tile of the remaining plurality of source tiles that has a next lowest y coordinate value and assigning an incremental source tile index value to that next selected source tile in the source tile index; and
(iii) repeating step (ii) until all the source tiles in the source image have been assigned a source tile index value in an ascending order;
wherein at least one y coordinate value of a first target tile is higher than a y coordinate value of a second target tile, wherein the first target tile corresponds to a source tile that appears earlier in the ascending order of the source tile index than a corresponding source tile of the second target tile; and
performing distortion correction of the source image by mapping (240) each source tile to its corresponding target tile, wherein the distortion correction is performed for each tile in turn according to the source tile index.

2. The method of claim 1, wherein if two source tiles have a same y coordinate value in step (ii), the method further comprises:
selecting a first source tile of the two source tiles that has a lowest x coordinate value and assigning an incremental source tile index value to that first selected source tile in the source tile index: and
assigning a next incremental source tile index value to the second source tile in the source tile index.

3. The method of claim 1 or claim 2, further comprising determining a target tile look up table (LUT) based on the first mapping from a source tile to a respective target tile;
wherein the LUT indicates source tile coordinate position information for each source tile; and
wherein the LUT is re-ordered based on the sorted tile index.

4. The method of claim 3, wherein the source tile index and the LUT are determined prior to a runtime and stored in an external memory; and
wherein the source tile index and the LUT are recalled from the external memory during the runtime.

5. The method of any preceding claim, wherein each target tile has a target tile size comprising a width of the target tile and a height of the target tile; and
wherein each source tile has a source tile size comprising a width of the source tile and a height of the source tile.

6. The method of claim 5, wherein the plurality of target tiles each have a uniform size; and
the plurality of source tiles vary in size based on an amount of a distortion of each source tile.

7. The method of claim 6, wherein a source tile is larger than a respective target tile that the source tile maps to.

8. The method of claim 6 or claim 7, wherein the source image comprises a plurality of pixel rows extending a full width of the source image; and
during a runtime, a memory stores data corresponding to a subset of the pixel rows for performing the distortion correction to, wherein the subset of pixel rows comprises one or more source tiles.

9. The method of claim 8, further comprising determining a minimum memory size of the memory for storing the subset of pixel rows for processing comprising:
determining a tallest source tile based on the height information of the plurality of source tiles; and
calculating a minimum memory size by multiplying the height of the tallest source tile by a memory required to store one pixel row.

10. The method of claim 9, further comprising multiplying the result of the calculation by an additional factor greater than 1.

11. The method of any of claims 5 to 10, wherein the width of the target tiles is selected based on a DRAM burst length.

12. The method of any preceding claim, wherein the source image is received from an image sensor or an image signalling processor with a lens having a known distortion.

13. The method of any preceding claim, further comprising deleting data relating to the source image that is not part of any source tile.

14. A system comprising:
a lens and an image sensor for acquiring a source image;
a memory for storing at least part of the source image and a target image; and
a processor configured to carry out the method according to any of claims 1 to 13.

15. An automobile comprising a system according to claim 14.
